(19) Europäisches Patentamt
European Patent Office
Office européen des brevets

(11) Publication number: **0 219 965 B1**

(12) # EUROPEAN PATENT SPECIFICATION

(45) Date of publication of patent specification: **12.06.91**

(51) Int. Cl.[5]: **G02F 1/137**

(21) Application number: **86306946.4**

(22) Date of filing: **09.09.86**

(54) **A ferroelectric liquid crystal electro-optical device.**

(30) Priority: **18.09.85 JP 205652/85**

(43) Date of publication of application:
**29.04.87 Bulletin 87/18**

(45) Publication of the grant of the patent:
**12.06.91 Bulletin 91/24**

(84) Designated Contracting States:
**DE FR GB IT NL SE**

(56) References cited:
**EP-A- 0 160 302**
**EP-A- 0 168 242**
**DE-A- 3 502 160**

**FERROELECTRICS, vol. 59, 1984, J.S. PATEL, T.M. LESLIE, J.W. GOODBY: "A reliable method of alignment for smetic liquid crystals", pages 137-144**

(73) Proprietor: **SEIKO INSTRUMENTS INC.**
**31-1, Kameido 6-chome Koto-ku**
**Tokyo 136(JP)**

(72) Inventor: **Harada, Takamasa**
**c/o SEIKO INSTRUMENTS & ELECTRONICS LTD.**
**31-1, Kameido 6-chome Koto-ku Tokyo(JP)**
Inventor: **Taguchi, Masaaki**
**c/o SEIKO INSTRUMENTS & ELECTRONICS LTD.**
**31-1, Kameido 6-chome Koto-ku Tokyo(JP)**
Inventor: **Shimoda, Sadashi**
**c/o SEIKO INSTRUMENTS & ELECTRONICS LTD.**
**31-1, Kameido 6-chome Koto-ku Tokyo(JP)**
Inventor: **Ito, Kokichi**
**c/o SEIKO INSTRUMENTS & ELECTRONICS LTD.**
**31-1, Kameido 6-chome Koto-ku Tokyo(JP)**

(74) Representative: **Caro, William Egerton et al**
**J. MILLER & CO. Lincoln House 296-302 High Holborn**
**London WC1V 7JH(GB)**

**EP 0 219 965 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to ferroelectric liquid crystal electrooptical devices such as display devices, shutter arrays for printers, shutters for cameras or optical shutters for windows.

Electro-optical devices having a ferroelectric chiral smectic liquid crystal material sandwiched between two substrates are known and are described, for example, in U.S. Patent Specifications Nos. 4,367,924 and 4,563,059.

Published European Patent Application No. 0 168 242 which constitutes prior art in the meaning of 54 (3) EPC for the designated contracting states DE, FR, GB, IT, NL, SE, discloses a ferroelectric liquid crystal electro-optical device comprising two opposed plates having electrodes on the inner surfaces thereof, and a ferroelectric liquid crystal material between the plates. One of the plates has a uni-axial alignment characteristic on the surface in contact with the liquid crystal material and the other plate has a random homogenous alignment characteristic on the surface thereof in contact with the liquid crystal material. This provides a bi-stable state for the molecules of the liquid crystal material. In other words, the liquid crystal molecules that are arranged in one stable state are rearranged in the other stable state by applying a voltage between the electrodes, the optical characteristics in the two states being different.

This ferroelectric liquid crystal electro-optical device is not altogether satisfactory for the following reasons.

First, no suitable material which provides a complete random homogenous alignment characteristic for the liquid crystal molecules has been found. Since physical properties to be satisfied by the material are not quantifiable, its selection must be by trial and error. Secondly, it has not been possible, using conventional random alignment materials, to accomplish a defined and stable bi-stable state of the liquid crystal molecules. As a result, the transmission cut-off contrast resulting from change in alignment states of the liquid crystal molecules by the application of a voltage is not sufficiently high.

According to the present invention there is provided a ferro-electric liquid crystal electro-optical device comprising: two opposed plates having electrodes on the inner surfaces thereof, the inner surface of one of said two plates having an uni-axial alignment characteristic and the inner surface of the other plate having a random alignment characteristic; a liquid crystal material having a ferro-electric chiral smectic phase and being sandwiched between said plates, wherein the random alignment characteristic is provided on a layer of water repellent material.

Said layer of water repellent material has a contact angle of at least 60°, and preferably at least 80° to water droplets.

Said water repellent material may be an A-B type block polymer. Said A-B type block polymer may have a functional segment providing water repellency and a compatible segment which is compatible with a resin of said layer.

Said functional segment may be a fluorinated alkyl group.

Preferably said resin is an acrylic resin and said compatible segment is an acrylic polymer.

In the preferred embodiment said uni-axial alignment characteristic is obtained by rubbing or obliquely evaporating a thin layer made of at least one of polyimide, polyvinyl alcohol, fluorine-containing polymer, silane, $SiO_2$ and $MgF_2$ provided on the inner surface of said one plate.

The invention is illustrated, merely by way of example, in the accompanying drawings, in which:-

Figure 1 is a sectional schematic view of a ferroelectric liquid crystal electro-optical device according to the present invention;

Figure 2 is a schematic view showing the molecular arrangement of a chiral smectic liquid crystal material;

Figure 3 is a schematic view showing ideal positions and actual positions of the molecules of a chiral smectic liquid crystal material;

Figure 4 is a schematic view showing a bi-stable state of a molecule of a chiral smectic liquid crystal material;

Figure 5 are driving waveforms of signals for driving a ferroelectric liquid crystal electro-optical device according to the present invention;

Figure 6 is a view for explaining the driving principle of a ferroelectric liquid crystal electro-optical display device according to the present invention;

Figure 7 is a schematic diagram of an A-B type block polymer;

Figure 8 is a sectional view of a water repellent random alignment film;

Figure 9 is an explanatory diagram illustrating contact angle; and

Figure 10 is a graph showing the contact angle and cone angle characteristics of various water repellent random alignment films.

Referring first to Figure 1, there is shown a ferroelectric liquid crystal electro-optical device according to the present invention. Two substrates 1,2, at least one of which is transparent, are disposed in parallel with each other. An electrode film 3 is formed on the inner surface of each of the substrates. The electrode films are used for applying a voltage to ferroelectric, chiral smectic liquid crystal material 4 sandwiched between the substrates 1,2.

Figure 2 shows the molecular arrangement of a chiral smectic liquid crystal material. The liquid crystal molecules constitute a layer 5. In Figure 2, five layers are shown extending from left to right. The direction of the major axis of the liquid crystal molecules (hereinafter called the "molecular axis") in one layer is inclined at an angle $\theta$ to the normal to the layer, this angle being the same in all the layers. On the other hand, the liquid crystal molecules in one layer are located at the same position on the circumference of a respective imaginary cone 6. However, this position on the circumference of the cone 6 is different from layer to layer. Moreover, the molecular axis rotates for each layer relative to the normal to the layer, and the molecular orientation assumes a helical structure.

Chiral smectic liquid crystal material in general not only assumes a helical structure but has dipoles 7 and exhibits a ferro-electric property in a direction perpendicular to the molecular axis.

An example of a chiral smectic liquid crystal material is P-decycloxybenzylidene P'-amino-2-methyl-butyl cinnamate of the following formula:

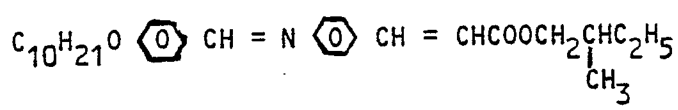

Referring back to Figure 1, the helical structure described above disappears if the gap between the substrates 1, 2 is smaller than the period of the helix, namely about 1 micrometer.

In other wcrds, the molecular axis is approximately parallel with the substrates and the liquid crystal molecules are arranged at an angle $\theta$ to a direction normal to the layer. Here, the normal direction of the layer is approximately parallel to the substrates. Therefore, the layer is formed perpendicularly to the substrates.

In Figure 1, reference numeral 8 represents an alignment film having a uni-axial alignment characteristic. The uni-axial alignment characteristic may be obtained by rubbing a thin layer made of an organic film such as polyimide, polyamide, polyamideimide polyvinyl alcohol, fluorine-containing polymer or silane or by obliquely evaporating such inorganic material as $SiO_2$ or $MgF_2$. Uni-axial alignment treatment fixes or aligns adjacent liquid crystal molecules approximately horizontally to the substrates in the alignment direction. Liquid crystal molecules in the bulk of the liquid crystal material, however, may tilt a little. Figure 1 is viewed from the uni-axial alignment direction.

Reference numeral 9 represents a random alignment treatment film having no direction of alignment, using a highly water repellent material. The film 9 is disposed on the inner surface of the substrate 2. It is assumed that this random alignment does not limit the direction of the adjacent liquid crystal molecules but functions to arrange them substantially parallel to the substrate. In the case of the present invention, the random alignment is helpful to free the contact interface between the liquid crystal molecular domain that appears due to the influence of the uni-axial orientation and the molecular domain due to the influence of the random orientation. Here, the term "free" means that the interaction of the upper and lower liquid crystal molecules with the interface, being the boundary, is reduced. For this reason, the arrangement of the liquid crystal molecules that have grown from the uni-axial alignment film can take positions that are the most stable.

These positions are two-fold and are represented by black circles and white circles 10 in Figure 1. In other words, a bi-stable state can be established. Ideally these positions are horizontal to the substrates and lie on a line that intersects the imaginary cone 6 and the horizontal plane. They are the positions at angles $\pm\theta$ relative to the normal to the layer (perpendicular to the plane of Figure 1).

However, in the conventional alignment treatment, the molecules are slantingly orientated to the substrates (at positions of molecules represented by reference numerals 21,22 in Figure 3). In this case, when the molecules are observed from above the electro-optical device, the cone angle is smaller than the ideal cone angle when the liquid crystal molecules are arranged at ideal stable positions 13,14. Since the contrast is optically determined by this apparent cone angle, the conventional alignment can provide only a relatively low contrast.

Now, when random alignment treatment is carried out by use of a highly water repellent material such as in the present invention, the liquid crystal molecules can be arranged in the ideal bi-stable state described above. In Figure 1, reference numerals 11,12 represent two polarisers whose axes of polarisation intersect and which convert the movement of the arrangement of the liquid crystal molecules between their bi-stable states to produce an optical change.

Figure 4 shows an ideal bi-stable state which is accomplished when random homogeneous alignment treatment is conducted using a water repellent material. In other words, the liquid crystal molecules are arranged at the ideal stable position 13 or 14 on an imaginary horizontal plane 15 parallel to the imaginary cone 6 and to the substrate. The angle of the molecular axis of the liquid crystal molecules at both ideal stable positions is $2\theta$ and is ideally 45°.

Figure 5 shows driving waveforms of signals for changing over the arrangement of the liquid crystal molecules between the bi-stable states described above making possible electro-optical switching. A waveform (a) is used for shifting the molecules from the first stable state to the second stable state, and a voltage $+V_{ap}$ is applied in a direction which is parallel to the dipole of the liquid crystal molecules but is in the opposite direction. The dipole is repelled, moving on the orbit of the imaginary cone and shifting to the second stable state. At this time, the direction of the dipole 7 is inverted (see Figure 4). An AC pulse ±1/3 $V_{ap}$ after the pulse $+V_{ap}$ is for keeping the liquid crystal molecules in the stable state.

A waveform (b) is a driving waveform for shifting the molecules from the second stable state to the first stable state. Since the direction of the dipole is opposite to that described above, switching is effected by a pulse having a voltage $-V_{ap}$.

Figure 6 shows the principle of driving when the electro-optical device is observed from above. The axis of polarisation of the polariser 11 on the incident side is in agreement with the first stable position 13. The axis of polarisation of the polariser 12 on the outgoing side is at 90° to that of the polariser 11. When the liquid crystal molecules are in the first stable position 13, a ray of light polarised by the polariser 11 reaches the polariser 12 on the outgoing side without change of direction of polarisation, but no light passes through the polariser 12 because the polarisers are crossed. This is a light cut-off state. When the liquid crystal molecules move to the second stable position 14, on the other hand, the light passes through the polariser 12 due to birefringence of the liquid crystal material. In the case of the present invention, the angle $2\theta$ of the molecular axis of the liquid crystal molecules between the two stable positions (hereinafter, this will be referred to as the "cone angle") is approximately 2 × 22.5° = 45°. Therefore, most of the light incident on the polariser 11 passes through the polariser 12. This is a light transmission state. Incidentally, in order to achieve ideal optical switching described above, the following relation must be satisfied between thickness $_d$ of the liquid crystal material and anisotropy $\Delta n$ of the refractive index of the liquid crystal material:

$$d = (2n - 1)\,\alpha/\Delta n$$

where

- $\alpha$: $c\pi/\omega$,
- n: refractive index
- c: light velocity
- $\omega$: angular frequency of light.

The reason why the ideal orientation state can be established approximately is that the liquid crystal molecules are substantially horizontal to the substrates and the cone angle is close to the maximum.

In one embodiment of the present invention, an A-B type block polymer was used as a water repellent random homogeneous alignment material. The A-B type block polymer, shown schematically in Figure 7, was composed of a functional segment 16 having excellent surface shifting properies and a compatible segment 17 which was resin compatible. A fluorinated alkyl group was used as the functional segment and an acrylic polymer as the compatible segment.

Figure 8 is a sectional view of a water repellent random alignment film. 10% of the A-B type block polymer was added to an acrylic monomer solution, and the solution was coated on the surface of the substrate 2 and the substrate was then baked at 200°C. An acrylic resin film 18 was thus formed on the surface of the substrate 2 and the compatible segment 17 of an A-B type block polymer 19 was fixed therein. The functional segment was shifted and orientated to the surface and exhibited water repellency.

Contact angle (shown in Figure 9) represents water repellency. The contact angle represents the angle between a water droplet 20 and the surface of the film 9, and the greater the contact angle, the higher the water repellency. In this embodiment, the contact angle was 96.7°.

Next, the contact angles, cone angles and light cut-off/ transmission contrast were measured for various materials for the sake of comparison. The results are illustrated in the following Table:

| Random Homogeneous Alignment Material | Contact Angle | Cone Angle | Contrast |
|---|---|---|---|
| A-B block polymer + acrylic resin | 96.7° | 34° | 11 |
| organic silane, vertical alignment + heating at 300°C | 74° | 27.5° | - |
| polyimide | 71.2° | 19° | 11.3 |
| Photosensitive polyamide | 66.5° | 14° | 1.3 |
| ethyl metachrylate | 64° | 22° | 3.8 |
| cellulose acetate | 57.2° | 15° | 1.9 |
| polyvinyl alcohol | 39° | 6° | 1.2 |

Figure 10 is a diagram showing the relation between the contact angle and the cone angle in the above Table. It can be seen from Figure 10 that the greater the contact angle, that is, the higher the water repellency, the closer the cone angle is to the ideal angle of 45°. Therefore, the light cut-off/ transmission contrast, also is improved in consequence. This is because the higher the water repellency, the more closely are orientated the liquid crystal molecules to the horizontal. In practice, sufficient contrast can be obtained if the contact angle is at least 90°. In orientation with tilt, on the other hand, the cone angle becomes smaller than the ideal angle and hence the contrast angle becomes worse.

Incidentally, an example of an uni-axially orientation method is forming a polyimide film by printing or dipping and then rubbing it uni-directionally.

In the above described embodiment of the present invention using a material having water repellency as a random homogeneous alignment material, the cone angle approaches the ideal value and the light cut off/transmission contrast can be improved drastically.

## Claims

1. A ferro-electric liquid crystal electro-optical device comprising: two opposed plates (1, 2) having electrodes (3) on the inner surfaces thereof, the inner surface of one of said two plates having an uni-axial alignment characteristic (8) and the inner surface of the other plate having a random alignment characteristic; a liquid crystal material (4) having a ferroelectric chiral smectic phase and being sandwiched between said plates, wherein the random alignment characteristic is provided on a layer (9) of water repellent material.

2. A ferro-electric liquid crystal electro-optical device as claimed in claim 1 wherein said layer of water repellent material has a contact angle of at least 60° to water droplets.

3. A ferro-electric liquid crystal electro-optical device as claimed in claim 2 wherein said contact angle is at least 80°.

4. A ferro-electric liquid crystal electro-optical device as claimed in any preceding claim wherein said water repellent material is an A-B type block polymer.

5. A ferro-electric liquid crystal electro-optical device as claimed in claim 4 wherein said A-B type block polymer has a functional segment providing water repellency and a compatible segment which is compatible with a resin of said layer.

6. A ferro-electric liquid crystal electro-optical device as claimed in claim 5 wherein said functional segment is a fluorinated alkyl group.

7. A ferro-electric liquid crystal electro-optical device as claimed in claim 5 or 6 wherein said resin is an acrylic resin and said compatible segment is an acrylic polymer.

8. A ferro-electric liquid crystal electro-optical device as claimed in any preceding claim wherein said uniaxial alignment characteristic is obtained by rubbing or obliquely evaporating a thin layer made of at least one of polyimide, polyvinyl alcohol, fluorinecontaining polymer, silane, $SiO_2$ and $MgF_2$ provided on the inner surface of said one plate.

## Revendications

1. Dispositif électro-optique à cristal liquide ferro-électrique comprenant : deux plaquettes (1, 2) opposées, ayant des électrodes sur leur surface intérieure, la surface intérieure de l'une des deux plaquettes ayant une caractéristique d'alignement (8) uniaxiale, et la surface intérieure de l'autre plaquette ayant une caractéristique d'alignement au hasard ; une matière formant cristal liquide (4) ayant une phase smectique chirale ferro-électrique et prise en sandwich entre les plaquettes, la caractéristique d'alignement au hasard étant prévue sur une couche (9) de matière repoussant l'eau.

2. Dispositif électro-optique á cristal liquide ferro- électrique suivant la revendication 1, dans lequel la couche de matière repoussant l'eau a un angle de raccordement d'au moins 60° pour des gouttelettes d'eau.

3. Dispositif électro-optique à cristal liquide ferro-électrique suivant la revendication 2, dans lequel l'angle de raccordement est d'au moins 80° .

4. Dispositif électro-optique à cristal liquide ferro-électrique suivant l'une quelconque des revendications précédentes, dans lequel la matière repoussant l'eau est un copolymère séquencé de type A-B.

5. Dispositif électro-optique à cristal liquide ferro-électrique suivant la revendication 4, dans lequel le polymère séquencé de type A-B a un segment fonctionnel fournissant la répulsion de l'eau et un segment compatible qui est compatible avec une résine de la couche.

6. Dispositif électro-optique à cristal liquide ferro-électrique suivant la revendication 5, dans lequel le segment fonctionnel est un groupe alcoyle fluoré.

7. Dispositif électro-optique à cristal liquide ferro-électrique suivant la revendication 5 ou 6, dans lequel la résine est une résine acrylique et le segment compatible est un polymère acrylique.

8. Dispositif électro-optique à cristal liquide ferro-électrique suivant l' une quelonque des revendications précédentes , dans lequel la caractéristique d'alignement uniaxiale est obtenue en frottant ou en faisant s'évaporer obliquement une mince couche en au moins un polyimide, alcool polyvinylique, polymère fluoré, silane, $SiO_2$ et $MgF_2$ prévu sur la surface intérieure de ladite une plaquette.

## Ansprüche

1. Ferro-elektrische elektro-optische Flüssigkristallvorrichtung, welche zwei gegenüberliegende Platten (1,2), die an ihren Innenflächen Elektroden (3) aufweisen, wobei die Innenfläche einer der beiden Platten eine uniaxiale Ausrichtungscharakteristik (8) hat, und die Innenfläche der anderen Platte eine willkürliche Ausrichtungscharakteristik hat, und ein Flüssigkristallmaterial (4) umfaßt, das eine ferroelektrische chiral-smektische Phase hat und sandwichartig zwischen den Platten angeordnet ist, wobei

die willkürliche Ausrichtungscharakteristik an einer Schicht (9) aus einem wasserabstoßenden Material vorgesehen ist.

2. Ferro-elektrische elektro-optische Flüssigkristall Vorrichtung nach Anspruch 1, bei der die Schicht aus dem wasserabstoßenden Material einen Kontaktwinkel von wenigstens 60° zu Wassertropfen hat.

3. Ferro-elektrische elektro-optische Flüssigkristallvorrichtung nach Anspruch 2, bei der der Kontaktwinkel wenigstens 80° beträgt.

4. Ferro-elektrische elektro-optische Flüssigkristallvorrichtung nach einem vorhergehenden Anspruch, bei der das wasserabstoßende Material ein Blockpolymerisat vom A-B-Typ ist.

5. Ferro-elektrische elektro-optische Flüssigkristallvorrichtung nach Anspruch 4, bei der das Blockpolymerisat vom A-B-Typ ein funktionelles Segment, das die wasserabstoßende Eigenschaft liefert,und ein kompatibles Segment aufweist, das mit einem Harz der genannten Schicht kompatibel ist.

6. Ferro-elektrische elektro-optische Flüssigkristallvorrichtung nach Anspruch 5, bei der das funktionelle Segment eine fluorierte Alkylgruppe ist.

7. Ferro-elektrische elektro-optische Flüssigkristallvorrichtung nach Anspruch 5 oder 6, bei der das Harz ein Acrylharz ist und das kompatible Segment ein Acrylpolymerisat ist.

8. Ferro-elektrische elektro-optische Flüssigkristallvorrichtung nach einem vorhergehenden Anspruch, bei der die uniaxiale Ausrichtungscharakteristik durch Schleifen oder Schrägverdampfen einer dünnen Schicht wenigstens aus Polyimid, Polyvinylalkohol, einem Fluor enthaltenden Polymerisat, Silan, $SiO_2$ oder $MgF_2$ erhalten ist, die auf der Innenfläche der einen Platte vorgesehen ist.

FIG. 1

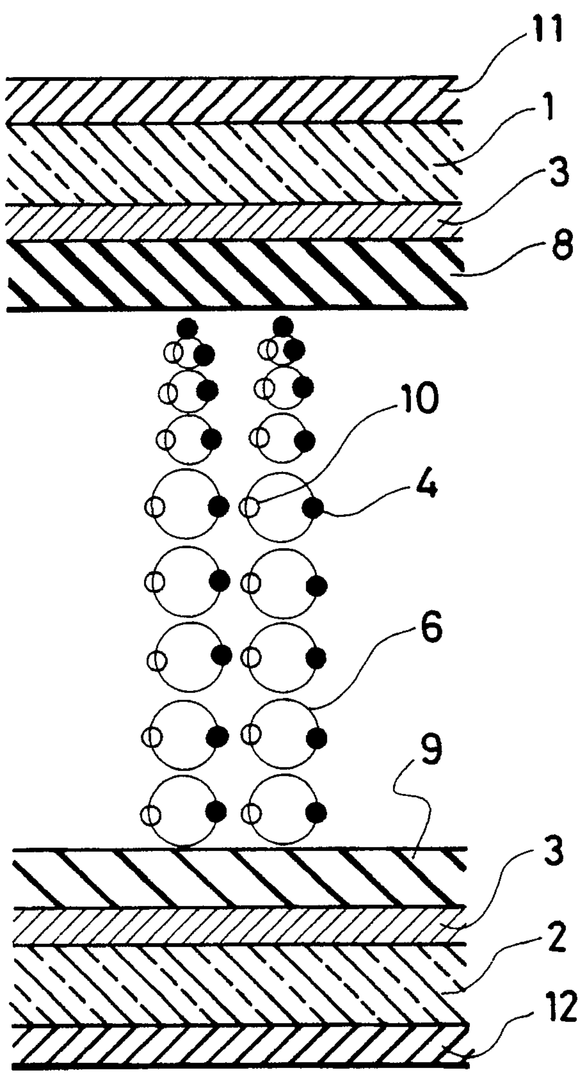

FIG. 2

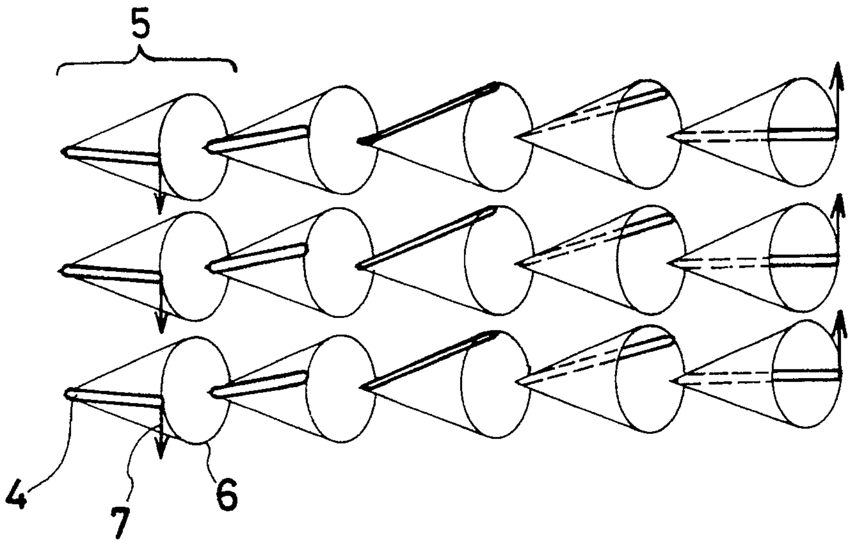


FIG. 3

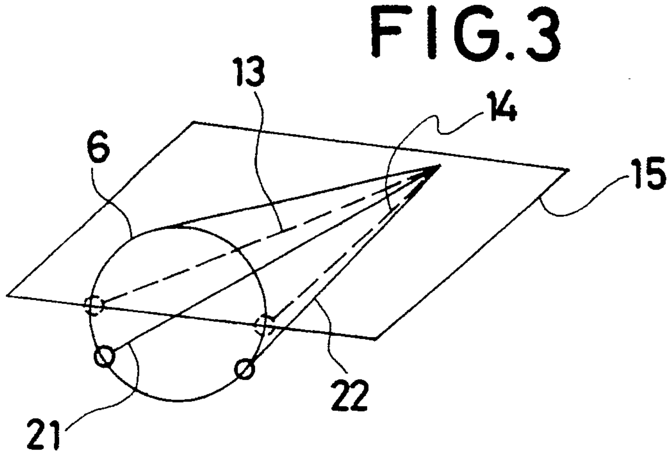


FIG. 4

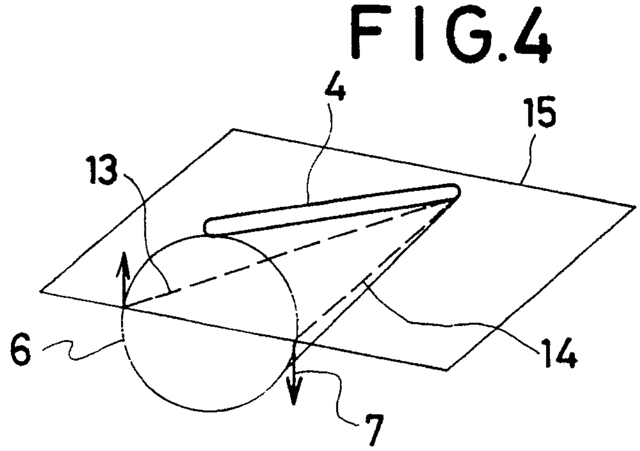

FIG. 5

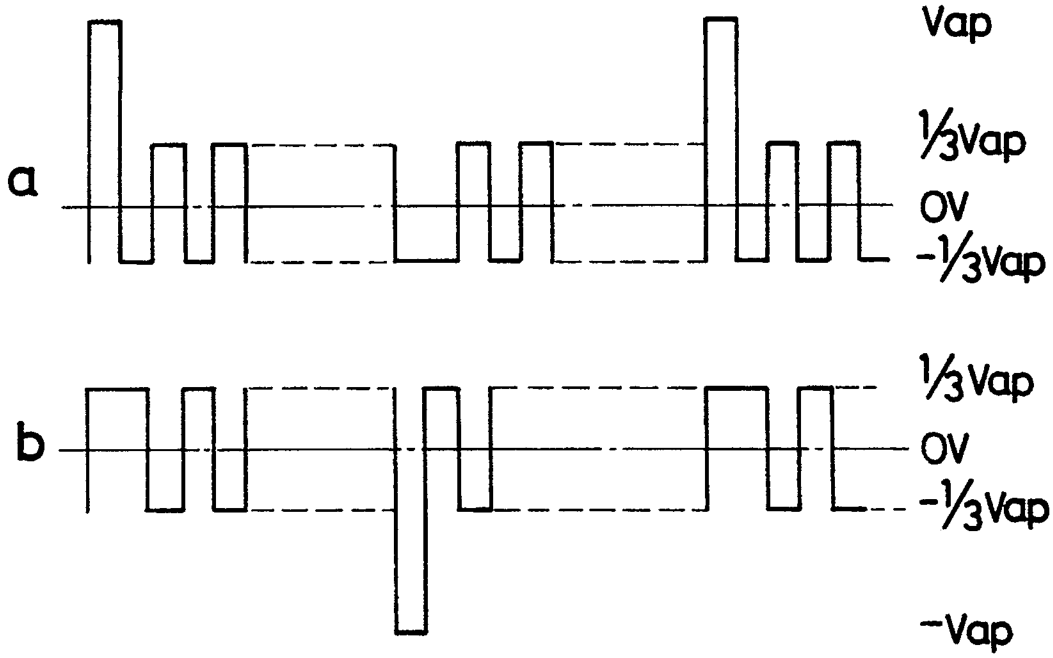


FIG. 6

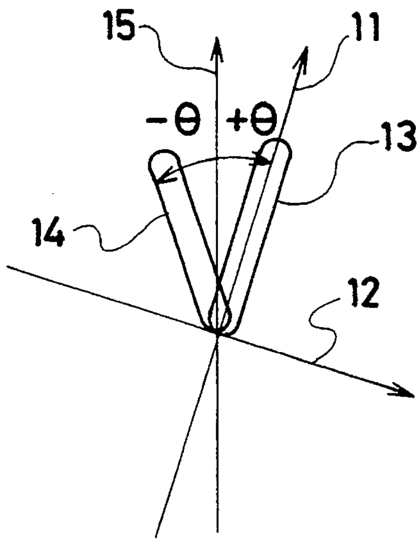

FIG.7

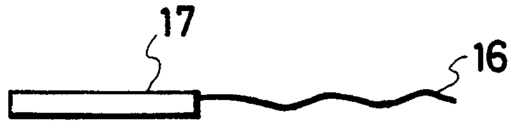


FIG.8

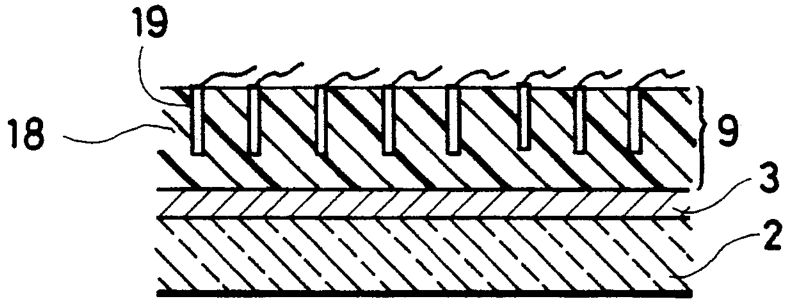


FIG.9

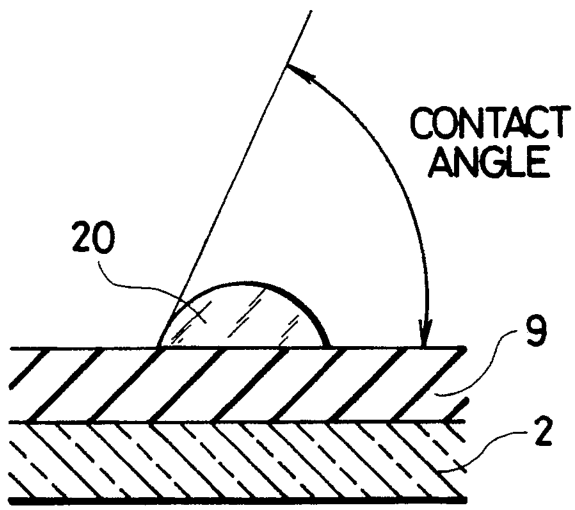

FIG.10

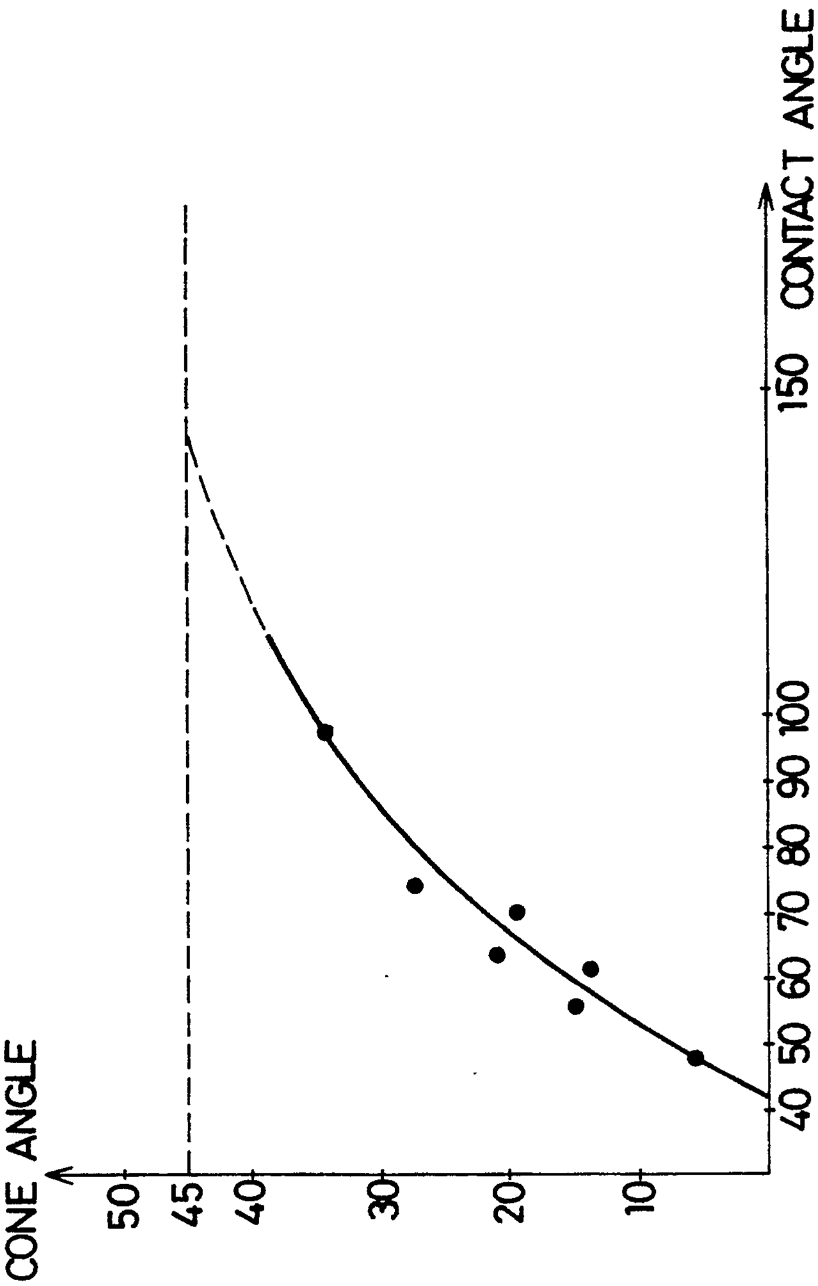
CONE ANGLE
50
45
40
30
20
10
40
50
60
70
80
90
100
150
CONTACT ANGLE